# EUROPÄISCHE PATENTANMELDUNG

(11) **EP 0 942 168 A2**
(43) Veröffentlichungstag der Anmeldung: **15.09.1999**
(21) Anmeldenummer: 99104854.7
(22) Anmeldetag: 11.03.1999
(51) Int. Cl.: F03D 7/02

(54) **Verfahren zur Verstellung der Rotorblätter einer Windkraftanlage**

(30) Priorität: 13.03.1998 DE 19811952
(71) Anmelder: Tacke Windenergie GmbH, 48499 Salzbergen (DE)
(72) Erfinder: Weitkamp, Roland, 49080 Osnabrück (DE)
(74) Vertreter: Eisenführ, Speiser & Partner

(57) **Zusammenfassung**

Verfahren zur Verstellung der Rotorblätter (1) einer Windkraftanlage vom Horizontalrotor-Typ um ihre Längsachsen (AB) zur Überführung in eine für unzulässig hohe Windstärke und/oder bei Netzausfall geeignete Fahnenstellung (Fig. 1d), wobei die Profilhinterkanten (1b) der Rotorblätter in einem ersten Schritt zum Wind hin in eine Bremsstellung gedreht werden und mindestens eines der Rotorblätter in einem zweiten Schritt unabhängig von den übrigen verstellt wird, wobei in dem zweiten Schritt eines der Rotorblätter in die beim ersten Schritt eingestellte Drehrichtung bis in die positive Fahnenstellung weitergedreht wird, während der Rotor durch die übrigen Rotorblätter gebremst ist, und in einem dritten Schritt und gegebenenfalls weiteren Schritten die übrigen Rotorblätter in die positive Fahnenstellung weitergedreht werden.

## Beschreibung

Die Erfindung betrifft ein Verfahren gemäß dem Oberbegriff des Anspruchs 1 sowie eine Vorrichtung, die vorteilhaft zu dessen Durchführung eingesetzt werden kann.

Ein derartiges Verfahren ist aus der DE 196 26 402 C1 bekannt.

Moderne Windkraftanlagen mit Horizontalachsenrotor haben verstellbare Rotorblätter, wodurch die Angriffsfläche der Windgeschwindigkeit angepaßt und in einem relativ großen Windgeschwindigkeitsbereich eine annähernd konstante Leistung der Anlage eingehalten werden kann. Solche Anlagen können noch bei vergleichsweise hohen Windgeschwindigkeiten betrieben werden. Jenseits einer oberen Grenz-Windgeschwindigkeit, für die die Anlage konstruktiv ausgelegt ist, muß jedoch eine Begrenzung der mechanischen Belastungen und der Leistung erfolgen.

Am einfachsten ist hierfür die passive Ausnutzung des "Stall-Effektes", wobei ein Strömungsabriß am fest eingestellten Rotorblatt durch die elektrische Last der Anlage selbst, d.h. deren netzgekoppelten Asynchrongenerator, bewirkt wird. Durch diesen Strömungsabriß wird die Antriebskraft verringert und die Leistung begrenzt.

Eine weitere Gefahr für Windkraftanlagen stellen Netzausfälle und der damit verbundene Fortfall der elektrischen Last dar, denn dadurch kann - insbesondere bei starkem Wind - ein Hochlaufen der Anlage auf unzulässig hohe Drehzahlen bewirkt werden.

In der Praxis hat sich weiterhin als gangbar erwiesen, die Rotorblätter bei zu hoher Windgeschwindigkeit aktiv in eine sogenannte Parkposition zu bringen, um die mechanische Belastung des Rotors und der gesamten Anlage und die Leistung zu begrenzen. Außerdem ist ein Verstellen der Rotorblätter eine geeignete Maßnahme bei einem Netzausfall.

Für die Überführung der Rotorblätter in die Parkposition gibt es bei diesen sogenannten "Active-Stall"-Anlagen zwei grundsätzlich verschiedene Strategien:

Bei der ersten ist ein Verdrehen der Rotorblätter in eine als "Fahnenstellung" oder genauer als "positive Fahnenstellung" bezeichnete lastarme Parkposition mit gegen den Wind ausgerichteter Profilvorderkante vorgesehen. Hierbei muß der kritische Blattwinkelbereich im Normalbetrieb durch entsprechende Steuersoftware oder spezielle Sicherheitsschaltungen gesperrt werden, denn eine den Rotor in diesem Bereich treffende Bö könnte ein so hohes Drehmoment erzeugen, daß eine kaum noch kontrollierbare Drehzahlerhöhung auftritt.

Bei der zweiten Strategie wird eine (gelegentlich als "negative Fahnenstellung" bezeichnete) Parkposition gewählt, in der die Profilhinterkanten der Rotorblätter gegen den Wind ausgerichtet sind. Hierdurch wird eine Leistungsverminderung und Abbremsung des Rotors erreicht, und der zu realisierende Verstellbereich ist relativ klein. Der eingestellte Zustand ist allerdings instabil, die Variante ist mit einer hohen Torsionsbeanspruchung des einzelnen Rotorblattes - und damit auch einer hohen Belastung der Verstellmechanik - verbunden, und es besteht die Gefahr dynamischer Lastüberhöhungen.

In der DE 196 26 402 wird daher vorgeschlagen, die Rotorblätter zunächst alle gleichzeitig mit der Profilhinterkante zum Wind hin zu schwenken und sie danach nacheinander durch wenigstens einen Teil des Anströmbereiches in die Fahnenstellung als endgültige Parkposition zurückzudrehen. Hierdurch wird jedoch das Problem der Handhabung des kritischen Blattwinkelbereiches nicht befriedigend gelöst.

Der Erfindung liegt deshalb die Aufgabe zugrunde, das gattungsgemäße Verfahren mit dem Ziel der Vereinfachung der Anlage und der Betriebsführung und der Erhöhung der Betriebssicherheit weiterzuentwickeln.

Die Aufgabe wird durch ein Verfahren mit den im Anspruch 1 angegebenen Merkmalen gelöst.

Die Erfindung schließt den Gedanken ein, die Überführung der Rotorblätter in die Parkstellung auf eine Weise ablaufen zu lassen, die eine dauerhafte Sperrung des besagten kritischen Blattwinkelbereiches ermöglicht, d.h. dessen Durchfahren grundsätzlich nicht erfordert.

In einer vorteilhaften Variante der Erfinndung ist vorgesehen, daß in dem zweiten Schritt eines der Rotorblätter in die beim ersten Schritt eingestellte Drehrichtung bis in die (positive) Fahnenstellung weitergedreht wird, während der Rotor durch die noch in einem Winkel von ca. -20° bis -90° gegenüber der normalen Betriebstellung eingestellten übrigen Rotorblätter gebremst ist, und daß in einem dritten Schritt und - je nach Gesamtzahl der Rotorblätter - weiteren Schritten die übrigen Rotorblätter in die Fahnenstellung weitergedreht werden.

Alternativ hierzu werden in dem zweiten Schritt die Rotorblätter im wesentlichen zum gleichen Startzeitpunkt, jedoch mit unterschiedlicher effektiver Winkelgeschwindigkeit in die beim ersten Schritt eingestellte Drehrichtung bis in die Fahnenstellung weitergedreht, so daß der Rotor durch mindestens ein noch in einer Bremsstellung befindliches Rotorblatt gebremst ist, während mindestens ein weiteres Rotorblatt sich bereits der Fahnenstellung nähert bzw. diese schon erreicht hat. Die effektiven Winkelgeschwindigkeiten der Rotorblätter sollten sich um mindestens den Faktor 2 unterscheiden.

Es ist auch denkbar, die letztere Variante in Kombination mit der ersten Variante anzuwenden, indem sowohl die Startzeitpunkte als auch die Drehgeschwindigkeiten beim zweiten Schritt bzw. den folgenden Schritten unterschiedlich gewählt werden.

Das beim skizzierten Vorgehen durch jeweils ein Rotorblatt in zwei Positionen kurzzeitig erzeugte hohe Antriebsmoment ist geringer als beim Stand der Technik, weil die aerodynamische Güte des von der Hinterkante bzw. mit negativem Anstellwinkel angeströmten Blattprofils schlechter ist als bei Anströmung mit dem optimalen positiven Blattwinkel. Somit sind die im Verfahrensablauf hervorgerufenen Gesamtbelastungen, speziell auch Nick- und Giermomente, geringer als bei bekannten Verfahren.

Der Startzeitpunkt des zweiten Schrittes bzw. weiterer Schritte kann grundsätzlich in Abhängigkeit von der Rotorstellung, d.h. der Winkellage der Rotorblätter um die Rotorachse, gewählt werden. Hierzu sind vorab (insbesondere durch Simulationsrechnungen) die für eine konkrete Anlage unter definierten Bedingungen lastärmsten Rotorblattstellungen zu bestimmen und zu speichern, und über Fühler zur Erfassung der Blattstellung kann der zweite Schritt bei Erreichung der gespeicherten Optimalstellung eingeleitet werden.

Die Verstellung der Rotorblätter kann übrigens u.U. auch im ersten Schritt mit unterschiedlicher effektiver Winkelgeschwindigkeit erfolgen.

Die Verstellung der Rotorblätter kann kontinuierlich oder aber diskret bzw. impulsweise, z.B. in vorbestimmten Winkelschritten, erfolgen.

Die erfindungsgemäße Verfahrensführung ermöglicht in überraschend vorteilhafter Weise den Aufbau der Verstellvorrichtung für die Rotorblätter mit Mitteln zur permanenten Sperrung eines vorbestimmten kritischen Verstellwinkelbereiches (speziell des Bereiches von etwa + 3° bis + 70°), so daß dieser im Normalbetrieb auch bei einem etwaigen Fehler der Betriebssteuerung nicht durchlaufen werden kann.

Diese Sperrung kann rein mechanisch durch feste Anschlagmittel oder auch durch eine elektromechanische Blockierung und in diesem letzteren Rahmen auch softwaremäßig - aber eben getrennt vom regulären Betriebsprogramm und daher mit wesentlich erhöhter Sicherheit - erfolgen.

Die Verstellvorrichtung umfaßt bevorzugt weiterhin (als solche bekannte) Schaltmittel, die mindestens einer vorbestimmten Winkelstellung jedes Rotorblattes um seine Längsachse zugeordnet sind und bei der routinemäßigen Referenzierung der Rotorblätter genutzt werden bzw. zur Beeinflussung des bei einem Netzausfall oder in einem sonstigen Störfall eingeleiteten Verstellvorganges, insbesondeer zu einer zwangsöffnenden Notausschaltung, dienen. In einer bevorzugten Ausführung sind mit nur zwei Schaltern auf der Pitch-Konsole alle Referenzier- und Störschaltfunktionen steuerbar.

Auch hierfür ist eine einfache und zuverlässige mechanische Ausführung mit einer Nockeneinrichtung, insbesondere mit mehreren Schaltkurven auf einer Kurvenbahn, und mit durch diese betätigten Schaltern bzw. Kontakten möglich.

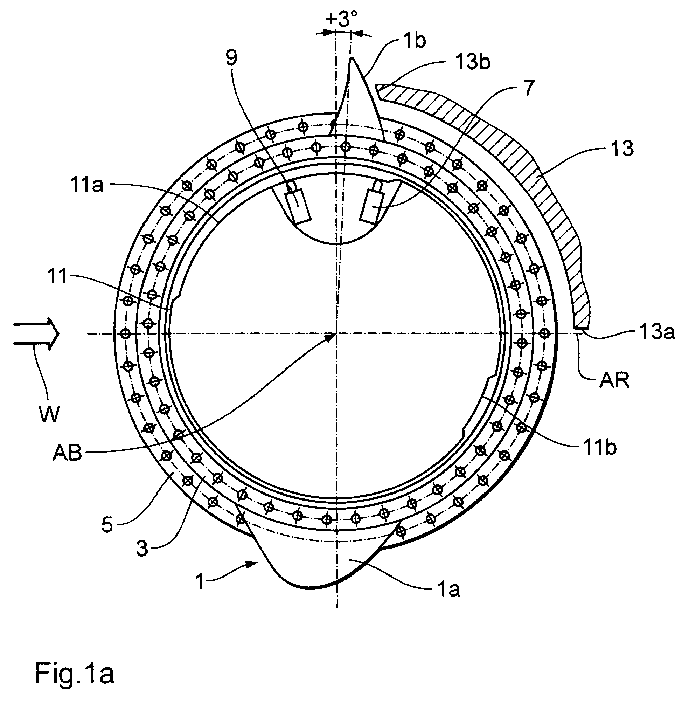

Vorteilhafte Weiterbildungen der Erfindung sind im übrigen in den Unteransprüchen gekennzeichnet bzw. werden nachstehend zusammen mit der Beschreibung der bevorzugten Ausführung der Erfindung anhand der Figuren näher dargestellt. Die Figuren 1a bis 1d zeigen Prinzipdarstellungen zu einem bevorzugten Ausführungsbeispiel der Erfindung.

Fig. 1a bis 1d zeigen die Querschnitts-Projektion eines Vorderkantenbereiches 1a und eines Hinterkantenbereiches 1b eines Rotorblattes 1 auf die zugehörige Anordnung aus einem mit dem Rotorblatt verbundenen Drehring 3 und einem äußeren Lagerring 5. In den Figuren sind außerdem schematisch ein Notschalter 7 und ein sogenannter Referenzierschalter 9, die mit einer Kurvenbahn 11 auf dem Drehring 3 zusammenwirken, und eine mechanische Sperre 13 mit zwei Anschlagflächen 13a und 13b gezeigt. Die Kurvenbahn 11 umfaßt zwei Steuerkurven oder Nocken 11a und 11b. Die Darstellung der mechanischen Sperre 13 in ein und derselben Figurenebene mit dem Rotorblattquerschnitt ist als rein schematisch zu verstehen, d.h. die Sperre greift in Wirklichkeit natürlich nicht am Blattprofil selbst an, sondern im (hier nicht dargestellten) Verstellmechanismus.

Die Projektion der Rotordrehachse auf die Figurenebene ist mit AR, die Drehachse der Blattwinkelverstellung mit AB und die angenommene Windrichtung mit dem Pfeil W bezeichnet. Einer normalen Betriebsstellung des Rotorblattes 1 (senkrecht zur Windrichtung) ist der Drehwinkelwert 0 zugeordnet, und eine Drehung des Rotorblattes entgegen dem Uhrzeigersinn (bzw. eine hierdurch eingenommene Winkellage), mit Blickrichtung auf die Rotornabe bzw. Figurenebene, ist durch ein negatives Vorzeichen gekennzeichnet, eine Drehung in Uhrzeigersinn bzw. eine entsprechende Winkellage mit positivem Vorzeichen.

Nachfolgend wird das Vorgehen zur Überführung des Rotorblattes in die Parkstellung erläutert, ohne daß zunächst weiter auf die Funktion der Schalter 7 und 9 eingegangen wird.

Fig. 1a zeigt eine Rotorstellung an der Grenze des normalen Betriebsbereiches, in der das Rotorblatt mit + 3° eingestellt ist. Eine Drehung im Uhrzeigersinn ist durch die Anschlagfläche 13b der Sperre 13 verhindert. Zusätzlich ist in diesem Zustand der Notschalter 7 durch die Schaltkurve 11a auf der Kurvenbahn 11 betätigt, so daß zur Schonung der Verstellmechanik eine Verstellung gegen den Anschlag verhindert wird (siehe dazu auch weiter unten).

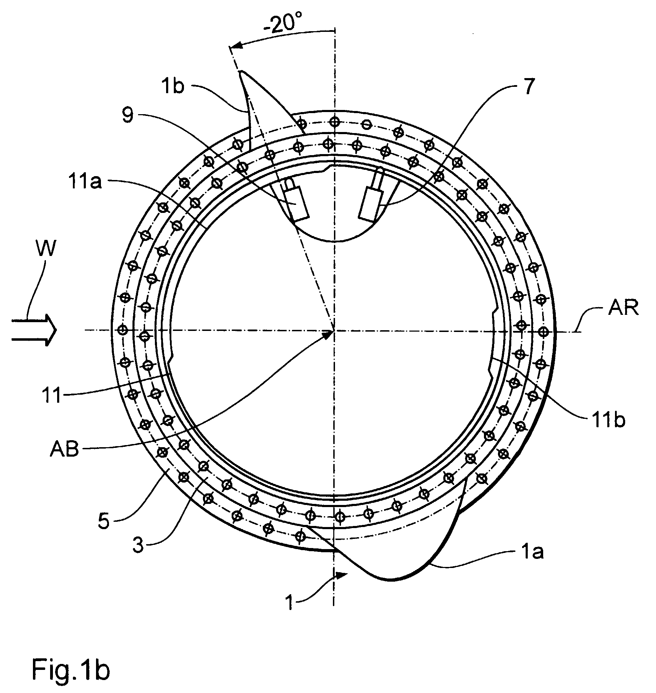

In einem ersten Schritt der Überführung des Rotorblattes 1 in die Parkstellung wird - wie in Fig. 1b gezeigt - das Blatt um 20° entgegen dem Uhrzeigersinn in eine Bremsstellung gedreht, d.h. in die Winkellage -20°, überführt. Dies ist eine rein beispielartige Darstellung; praktisch bewährt sind Bremsstellungen im Bereich zwischen etwa -15° und -35°. Diese Verstellung erfolgt für alle Blätter des Rotors, und zwar (insbesondere bei plötzlichem Einfall einer starken Windbö) grundsätzlich möglichst schnell.

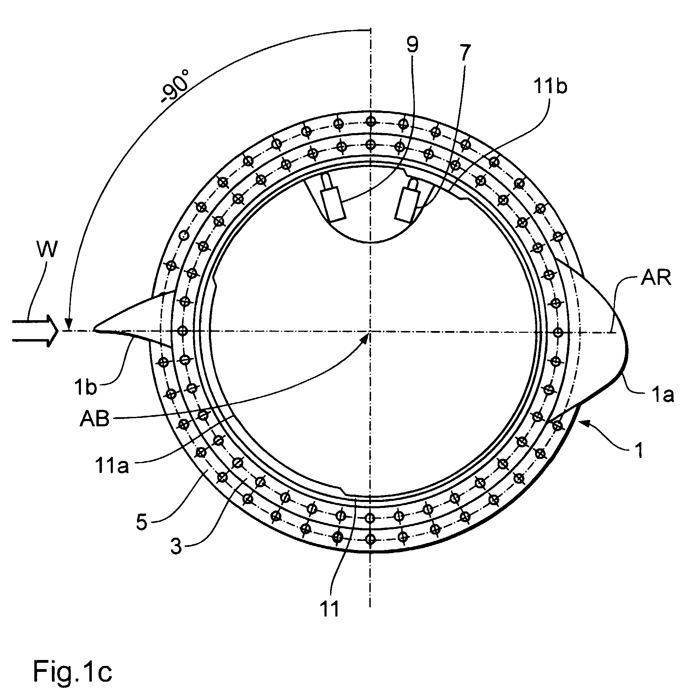

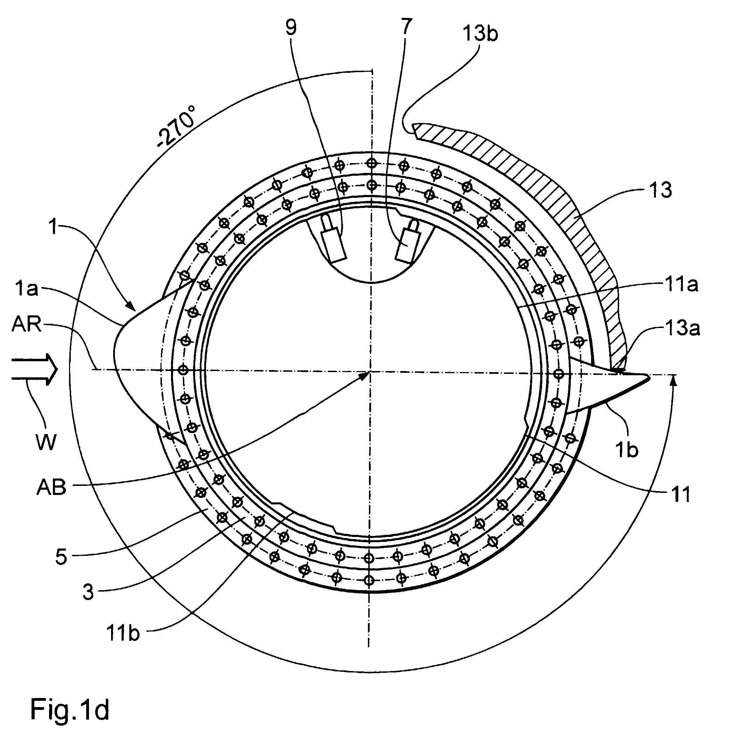

In dieser Stellung gemäß Fig. 1b werden alle Rororblätter bis auf eines festgehalten, und dieses eine wird in einem zweiten Schritt weiter entgegen dem Uhrzeigersinn unter Durchlaufen der in Fig. 1c gezeigten negativen Fahnenstellung mit gegen die Windrichtung W gestellter Profilhinterkante 1b ("durch den Wind") in die in Fig. 1d gezeigte positive Fahnenstellung mit auf -270° gedrehtem Rotorblatt, d.h. gegen die Windrichtung gestellter Profilvorderkante 1a, gedreht. In dieser Stellung wird ein Weiterdrehen entgegen dem Uhrzeigersinn durch die Anschlagfläche 13a der Sperre 13 verhindert. Bevor allerdings der Anschlag 13a überhaupt wirkt, hat die Kurve 11a den Notschalter 7 erreicht und im Interesse einer Schonung des Verstellmechanismus eine Abschaltung des Antriebes bewirkt.

Nachdem das zuerst in die positive Fahnenstellung gedrehte Rotorblatt somit seine lastarme Parkstellung erreicht hat (oder ggfs. auch schon kurz vorher), wird das nächste Blatt weitergedreht usw., bis alle Rotorblätter in ihre endgültige Parkstellung gebracht sind.

Die Überführung in die Parkstellung erfolgt also in vorteilhafter Weise ohne Drehrichtungsumkehr im zweiten Schritt bzw. den weiteren Schritten. Dies ermöglicht neben der weiter oben schon erwähnten Reduzierung der dynamischen Gesamtbelastung der Rotorblätter und ihrer Lager und einer Vereinfachung der Steuerung überhaupt erst das Vorsehen der Sperre 13: Da beim beschriebenen Vorgehen der Winkelbereich zwischen +3° und +90° (entsprechend -270°) generell niemals überstrichen wird, kann dieser Winkelbereich permanent gesperrt werden.

Der Notschalter 7 und der Referenzierschalter 9 wirken unabhängig vom oben beschriebenen, durch einen normalen Betriebssteuerrechner gesteuerten Verfahren, in einer als Sicherheitsschleife bezeichneten Notbetriebsart wie folgt:

Bei einem Netzausfall kann bei bestimmten Windkraftanlagen des oben beschriebene Typs im Akkubetrieb eine Verstellung der Rotorblätter in eine unkritische Winkelstellung durchgeführt werden. Bei Erreichen einer solchen Stellung wird der Antrieb abgeschaltet. Dies geschieht bei der Anordnung nach Fig. 1a bis 1d dadurch, daß bei der Stellung nach Fig. 1c (Rotorblatt bei -90° in negativer Fahnenstellung) die Schaltkurve 11b auf den Notschalter 7 aufläuft und diesen betätigt, und daß bei Einstellung des Rotorblattes auf -270° (positive Fahnenstellung; Fig. 1d) die Schaltkurve 11a auf den Notschalter 7 aufläuft. Das Weiterlaufen der Blattverstellung über die in Fig. 1a gezeigte Stellung hinweg - das im Notbetrieb erforderlich ist - wird durch eine geeignete UND-Verknüpfung der Notschalterfunktion mit der Schaltfunktion des Referenzierschalters 9 (siehe unten) erreicht.

Weiterhin muß bei Windkraftanlagen des oben beschriebenen Typs regelmäßig eine Feinanpassung der Winkellagen der Rotorblätter aneinander (eine sogenannte Referenzierung) erfolgen, da schon geringe Abweichungen der Winkelstellungen der einzelnen Blätter die Energieausbeute merklich verringern. Diesem Zweck dient bei der Anordnung nach Fig. 1a bis 1d der Referenzierschalter 9, auf den im Rahmen eines Referenziervorganges in der Winkelstellung von -20° (Fig. 1b) die Schaltkurve 11a aufläuft.

Im Rahmen der Ausführung der Erfindung ist mithin eine vorteilhafte Realisierung der nach obigem erforderlichen Schaltfunktionen mit nur zwei Schaltern und einer Kurvenbahn bzw. Nockeneinrichtung mit zwei Schaltkurven bzw. Nocken möglich.

Die Erfindung beschränkt sich in ihrer Ausführung nicht auf das vorstehend angegebene bevorzugte Ausführungsbeispiel. Vielmehr ist eine Vielzahl von Varianten möglich, welche von der dargestellten Lösung auch in anders gearteter Ausführung Gebrauch machen.

## Patentansprüche

1. Verfahren zur Verstellung der Rotorblätter (1) einer Windkraftanlage vom Horizontalrotor-Typ um ihre Längsachsen (AB) zur Überführung in eine lastarme Fahnenstellung (Fig. 1d), wobei die Profilhinterkanten (1b) der Rotorblätter in einem ersten Schritt, insbesondere um 20 bis 90°, zum Wind (W) hin in eine Bremsstellung (Fig. 1b) gedreht werden und mindestens eines der Rotorblätter in einem zweiten Schritt unabhängig von den übrigen verstellt wird, dadurch gekennzeichnet, daß
in dem zweiten Schritt eines der Rotorblätter in die beim ersten Schritt eingestellte Drehrichtung bis in die positive Fahnenstellung weitergedreht wird, während der Rotor durch die übrigen Rotorblätter gebremst ist, und
in einem dritten Schritt und gegebenenfalls weiteren Schritten die übrigen Rotorblätter in die positive Fahnenstellung weitergedreht werden.

2. Verfahren zur Verstellung der Rotorblätter (1) einer Windkraftanlage vom Horizontalrotor-Typ um ihre Längsachsen (AB) zur Überführung in eine lastarme Fahnenstellung (Fig. 1d), wobei die Profilhinterkanten (1b) der Rotorblätter in einem ersten Schritt, insbesondere um 20 bis 90°, zum Wind hin in eine Bremsstellung (Fig. 1b) gedreht werden und mindestens eines der Rotorblätter in einem zweiten Schritt unabhängig von den übrigen verstellt wird, dadurch gekennzeichnet, daß
in dem zweiten Schritt die Rotorblätter im wesentlichen zum gleichen Startzeitpunkt, jedoch mit unterschiedlicher effektiver Winkelgeschwindigkeit in die beim ersten Schritt eingestellte Drehrichtung bis in die positive Fahnenstellung weitergedreht werden, so daß der Rotor durch mindestens ein noch in einer Bremsstellung befindliches Rotorblatt gebremst ist, während mindestens ein weiteres Rotorblatt sich der Fahnenstellung nähert.

3. Verfahren nach Anspruch 2, dadurch gekennzeichnet, daß die effektiven Winkelgeschwindigkeiten der Rotorblätter sich um mindestens den Faktor 2 unterscheiden.

4. Verfahren nach einem der vorhergehenden Ansprüche, dadurch gekennzeichnet, daß die Verstellung der Rotorblätter in diskreten Schritten erfolgt.

5. Verfahren nach einem der vorhergehenden Ansprüche, dadurch gekennzeichnet, daß der Startzeitpunkt des zweiten Schrittes und folgender Schritte in Abhängigkeit von der Rotorposition bestimmt wird.

6. Vorrichtung zur Durchführung des Verfahrens nach einem der vorangehenden Ansprüche, gekennzeichnet durch Mittel (13) zur permanenten Sperrung eines vorbestimmten Verstellwinkelbereiches der Rotorblätter um ihre Längsachse.

7. Vorrichtung nach Anspruch 6, dadurch gekennzeichnet, daß die Mittel zur permanenten Sperrung als feste mechanische Anschlagmittel (13a, 13b) ausgebildet sind.

8. Vorrichtung nach Anspruch 6 oder 7, gekennzeichnet durch mindestens einer vorbestimmten Winkelstellung jedes Rotorblattes zugeordnete Schaltmittel (7, 9, 11) zur Beeinflussung, insbesondere Beendigung, eines Verstellvorganges und/oder zur Ausgabe eines Winkelpositionssignals bei Erreichen dieser Winkelstellung.

9. Vorrichtung nach Anspruch 8, dadurch gekennzeichnet, daßdie Schaltmittel eine Nockeneinrichtung (11) und einen durch diese betätigten Schalter (7, 9) aufweisen.

10. Vorrichtung nach Anspruch 9, dadurch gekennzeichnet, daß zur Ausführung aller erforderlichen Beeinflussungen und Winkelpositions-Signalausgaben genau zwei Schalter (7, 9) und eine Nockeneinrichtung (11) mit zwei Schaltkurven (11a, 11b) vorgesehen sind.
